# EUROPÄISCHE PATENTSCHRIFT

(11) **EP 4 652 360 B1**
(45) Veröffentlichungstag und Bekanntmachung des Hinweises auf die Patenterteilung: **31.12.2025**
(21) Anmeldenummer: 23813617.0
(22) Anmeldetag: 24.11.2023
(51) Int. Cl.: F01N 3/22

(54) **SEKUNDÄRLUFTVENTIL FÜR EIN SEKUNDÄRLUFTSYSTEM EINER VERBRENNUNGSKRAFTMASCHINE, VERBRENNUNGSKRAFTMASCHINE SOWIE KRAFTFAHRZEUG**
SECONDARY AIR VALVE FOR A SECONDARY AIR SYSTEM OF AN INTERNAL COMBUSTION ENGINE, INTERNAL COMBUSTION ENGINE, AND MOTOR VEHICLE
SOUPAPE D'AIR SECONDAIRE POUR SYSTÈME D'AIR SECONDAIRE DE MOTEUR À COMBUSTION INTERNE, MOTEUR À COMBUSTION INTERNE ET VÉHICULE À MOTEUR

(30) Priorität: 16.01.2023 DE 102023000108
(43) Veröffentlichungstag der Anmeldung: 26.11.2025
(73) Patentinhaber: Mercedes-Benz Group AG, 70372 Stuttgart (DE)
(72) Erfinder: BAUER, Mathias, 74626 Bretzfeld (DE)
(74) Vertreter: Novagraaf Group
(86) Internationale Anmeldenummer: PCT/EP2023/082929
(87) Internationale Veröffentlichungsnummer: WO 2024/153367

(56) Entgegenhaltungen:
- DE-B4- 10 357 886
- US-A1- 2005 204 732
- US-A1- 2016 115 845

## Beschreibung

Die Erfindung betrifft ein Sekundärluftventil für ein Sekundärluftsystem einer Verbrennungskraftmaschine gemäß dem Oberbegriff von Patentanspruch 1. Die Erfindung betrifft außerdem eine Verbrennungskraftmaschine für ein Kraftfahrzeug, mit einem Sekundärluftsystem. Des Weiteren betrifft die Erfindung ein Kraftfahrzeug.

Der DE 103 57 886 B4 ist ein Ventil für ein Sekundärluftzufuhr-System einer Brennkraftmaschine als bekannt zu entnehmen, mittels dessen diesem zuführbare Sekundärluft in ein Abgassystem der Brennkraftmaschine einleitbar ist. Außerdem offenbart die US 2016 / 0 115 845 A1 ein Sekundärluftventil. Des Weiteren ist aus der GB 2 520 038 A ein Abführmechanismus für komprimiertes Gas bekannt. Ferner ist der DE 103 57 886 B4 ein Ventil für ein Sekundärluftzufuhr-System einer Brennkraftmaschine als bekannt zu entnehmen. Ein weiteres Ventil ist aus US2005/204732 A1 bekannt.

Aufgabe der vorliegenden Erfindung ist es, ein Sekundärluftventil für ein Sekundärluftsystem einer Verbrennungskraftmaschine, eine Verbrennungskraftmaschine sowie ein Kraftfahrzeug zu schaffen, sodass eine besonders vorteilhafte Sekundärlufteinblasung realisiert werden kann.

Diese Aufgabe wird durch ein Sekundärluftventil mit den Merkmalen des Patentanspruchs 1, durch eine Verbrennungskraftmaschine mit den Merkmalen des Patentanspruchs 6 sowie durch ein Kraftfahrzeug mit den Merkmalen des Patentanspruchs 9 gelöst. Vorteilhafte Ausgestaltungen mit zweckmäßigen Weiterbildungen der Erfindung sind in den übrigen Ansprüchen angegeben.

Ein erster der Aspekt der Erfindung betrifft ein Sekundärluftventil für ein Sekundärluftsystem einer auch als Verbrennungsmotor oder Brennkraftmaschine bezeichneten und beispielsweise als Hubkolbenmotor, das heißt als Hubkolbenmaschine ausgebildeten Verbrennungskraftmaschine eines einfach auch als Fahrzeug bezeichneten Kraftfahrzeugs. Dies bedeutet, dass das vorzugsweise als Kraftwagen, insbesondere als Personenkraftwagen, ausgebildete Kraftfahrzeug in seinem vollständig hergestellten Zustand die Verbrennungskraftmaschine aufweist und mittels der Verbrennungskraftmaschine antreibbar ist. Die Verbrennungskraftmaschine weist in ihrem vollständig hergestellten Zustand das Sekundärluftsystem auf. Des Weiteren weist die Verbrennungskraftmaschine in ihrem vollständig hergestellten Zustand einen von Abgas der Verbrennungskraftmaschine durchströmbaren Abgastrakt auf, welcher auch als Abgasanlage bezeichnet wird. Die Verbrennungskraftmaschine weist außerdem wenigstens einen Brennraum, insbesondere mehrere Brennräume, auf, wobei in einem befeuerten Betrieb der Verbrennungskraftmaschine in dem jeweiligen Brennraum der Verbrennungskraftmaschine Verbrennungsvorgänge ablaufen. Bei dem jeweiligen Verbrennungsvorgang wird ein Kraftstoff-Luft-Gemisch verbrannt, woraus Abgas der Verbrennungskraftmaschine resultiert. Das Abgas kann aus dem jeweiligen Brennraum ausströmen und in den Abgastrakt einströmen und in der Folge den Abgastrakt durchströmen. Des Weiteren weist die Verbrennungskraftmaschine einen Ansaugtrakt auf, welcher auch als Ansauganlage bezeichnet wird. Der Ansaugtrakt ist von Luft durchströmbar, welcher auch als Frischluft bezeichnet wird. Mittels des Ansaugtrakts kann die Luft zu dem und in den jeweiligen Brennraum geführt werden, sodass aus der Luft und einem vorzugsweise flüssigen Kraftstoff das Kraftstoff-Luft-Gemisch gebildet werden kann. Mittels des Sekundärluftsystems kann Sekundärluft, insbesondere direkt, unter Umgehung des jeweiligen Brennraums, das heißt unter Umgehung der oder aller Brennräume der Verbrennungskraftmaschine, in den Abgastrakt eingeleitet werden, sodass die Sekundärluft auf ihrem Weg durch das Sekundärluftsystem und zu dem und in den Abgastrakt nicht durch den jeweiligen Brennraum, insbesondere durch keinen der Brennräume, der Verbrennungskraftmaschine hindurchströmt, mithin den jeweiligen Brennraum, insbesondere die oder alle Brennräume, der Verbrennungskraftmaschine umgeht.

In dem Abgastrakt ist beispielsweise wenigstens eine Abgasnachbehandlungskomponente zur Nachbehandlung des Abgases angeordnet. Die Sekundärluft, insbesondere in der Sekundärluft enthaltener Sauerstoff, wird beispielsweise genutzt, um die Abgasnachbehandlungskomponente effektiv und effizient zu erwärmen und/oder warmzuhalten. Diesbezüglich wird die Sekundärluft, insbesondere der in der Sekundärluft enthaltene Sauerstoff, beispielsweise verwendet, um in dem Abgastrakt, insbesondere in der Abgasnachbehandlungskomponente, einen unverbrannten Brennstoff, das heißt unverbrannte Kohlenwasserstoffe, zu oxidieren, mithin zu verbrennen. Insbesondere kann es sich bei dem Brennstoff um den Kraftstoff handeln.

Beispielsweise weist das Sekundärluftsystem eine von der Sekundärluft durchströmbare Sekundärluftleitung auf, welche beispielsweise an einer Verbindungsstelle mit dem Ansaugtrakt fluidisch verbindbar oder verbunden ist. Dadurch kann beispielsweise mittels der Sekundärluftleitung zumindest ein Teil der den Ansaugtrakt durchströmenden Luft an der Verbindungsstelle aus dem Ansaugtrakt abgezweigt und in die Sekundärluftleitung eingeleitet werden. Die aus dem Ansaugtrakt abgezweigte und in die Sekundärluftleitung eingeleitete Luft kann als die Sekundärluft die Sekundärluftleitung durchströmen und wird mittels der Sekundärluftleitung zu dem Abgastrakt geleitet und, insbesondere unter Umgehung des jeweiligen Brennraums, in den Abgastrakt eingeleitet. Somit wird ein Teil der den Ansaugtrakt durchströmenden Luft als die Sekundärluft verwendet. Dabei ist beispielsweise das Sekundärluftventil in der Sekundärluftleitung angeordnet. Beispielsweise kann mittels des Sekundärluftventils eine die Sekundärluftleitung durchströmende Menge der Sekundärluft eingestellt werden. Insbesondere ist es denkbar, dass mittels des Sekundärluftventils die Sekundärluftleitung wahlweise fluidisch versperrt oder freigegeben werden kann. Gibt das Sekundärluftventil die Sekundärluftleitung frei, so kann die Sekundärluft durch die Sekundärluftleitung hindurchströmen und in der Folge in den Abgastrakt eingeleitet werden. Versperrt das Sekundärluftventil die Sekundärluftleitung, kann keine Sekundärluft beziehungsweise keine Luft aus dem Ansaugtrakt die Sekundärluftleitung durchströmen.

Das Sekundärluftventil weist ein einfach auch als Gehäuse bezeichnetes Ventilgehäuse auf, welches von der in den Abgastrakt der Verbrennungskraftmaschine einzuleitenden Sekundärluft durchströmbar ist. Das Ventilgehäuse weist einen zylindrischen Gehäuseraum auf, welcher durch eine innenumfangsseitige Mantelfläche des Ventilgehäuses direkt begrenzt ist. Das Ventilgehäuse weist, insbesondere wenigstens oder genau, eine Eintrittsöffnung auf, über welche die Sekundärluft in das Ventilgehäuse und in den Gehäuseraum einleitbar ist. Insbesondere ist es denkbar, dass die Eintrittsöffnung mit dem Ansaugtrakt, insbesondere an der Verbindungsstelle, fluidisch verbunden oder verbindbar ist. Dabei mündet beispielsweise die Eintrittsöffnung, insbesondere direkt, in den Gehäuseraum. Somit ist beispielsweise der Gehäuseraum über die Eintrittsöffnung fluidisch mit dem Ansaugtrakt verbunden. Insbesondere ist das Ventilelement zumindest in der Schließstellung, insbesondere in der Schließstellung und in der Offenstellung, zumindest teilweise in dem Ventilgehäuse und somit zumindest teilweise in dem Gehäuseraum angeordnet.

Das Ventilgehäuse weist außerdem, insbesondere genau oder wenigstens, eine Austrittsöffnung auf, über welche die Sekundärluft, mithin die in dem auch als Aufnahmeraum bezeichnete Gehäuseraum aufgenommene oder aufnehmbare Luft, aus dem Ventilgehäuse, mithin aus dem Gehäuseraum, abführbar oder ausleitbar ist. Durch Ausleiten der Sekundärluft über die Austrittsöffnung aus dem Ventilgehäuse und somit aus dem Gehäuseraum kann die Sekundärluft in den Abgastrakt eingeleitet werden.

Das Sekundärluftventil weist außerdem ein Ventilelement auf, welches entlang einer Bewegungsrichtung relativ zu dem Ventilgehäuse zwischen einer Schließstellung und wenigstens einer Offenstellung, insbesondere translatorisch, bewegbar ist. In der Schließstellung ist mittels des Ventilelements die Austrittsöffnung verschlossen, mithin fluidisch versperrt, sodass die Sekundärluft beziehungsweise die in dem Gehäuseraum aufnehmbare oder aufgenommene Luft die Austrittsöffnung nicht durchströmen und somit nicht über die Austrittsöffnung aus dem Ventilgehäuse und somit aus dem Sekundärluftventil insgesamt ausströmen kann. In der Offenstellung gibt das Ventilelement die Austrittsöffnung frei, sodass die Sekundärluft beziehungsweise die in dem Gehäuseraum aufnehmbare oder aufgenommene Luft in der Offenstellung des Ventilelements die Austrittsöffnung durchströmen und somit über die Austrittsöffnung aus dem Ventilgehäuse beziehungsweise aus dem Sekundärluftventil insgesamt ausströmen kann. Somit ist beispielsweise die Sekundärluftleitung in der Schließstellung mittels des Ventilelements und somit mittels des Sekundärluftventils verschlossen. In der Offenstellung ist beispielsweise die Sekundärluftleitung freigegeben. Mit anderen Worten geben beispielsweise das Ventilelement und somit das Sekundärluftventil die Sekundärluftleitung in der Offenstellung frei. Somit kann beispielsweise die an der Verbindungsstelle aus dem Ansaugtrakt abgezweigte Luft als die Sekundärluft in der Offenstellung des Ventilelements das Sekundärluftventil und in der Folge die Sekundärluftleitung durchströmen, insbesondere derart, dass die Sekundärluft, die aus dem Ansaugtrakt stammt, über die Eintrittsöffnung in das Ventilgehäuse einströmen und über die Austrittsöffnung aus dem Ventilgehäuse und somit aus dem Sekundärluftventil insgesamt ausströmen kann.

Beispielsweise herrscht insbesondere in oder bei einem Betrieb der Verbrennungskraftmaschine, wobei während des Betriebs Luft durch den Ansaugtrakt hindurchströmt, in dem Gehäuseraum ein auch als Gehäuseraumdruck oder Gehäusedruck bezeichneter Druck und/oder der Gehäusedruck wirkt insbesondere über die Eintrittsöffnung auf das sich beispielsweise in der Schließstellung befindende Ventilelement, wobei der Gehäusedruck beispielsweise durch Luft, die in dem Gehäuseraum aufgenommen ist, und/oder durch Luft bewirkt wird, die in der Sekundärluftleitung, insbesondere in einem ersten Leitungsbereich der Sekundärluftleitung, aufgenommen ist und auf das sich beispielsweise in der Schließstellung befindende Ventilelement insbesondere über die Eintrittsöffnung wirkt. Der in dem Gehäuseraum und/oder in dem ersten Leitungsbereich herrschende und insbesondere auf das sich beispielsweise in der Schließstellung befindende Ventilelement wirkende Gehäusedruck entspricht beispielsweise dadurch, dass der Gehäuseraum über die Eintrittsöffnung fluidisch mit dem Ansaugtrakt verbunden ist, einem in dem Ansaugtrakt herrschenden und auch als Ansaugtraktdruck bezeichneten Druck, welcher beispielsweise durch die den Ansaugtrakt durchströmende Luft bewirkt wird beziehungsweise ein Druck der den Ansaugtrakt durchströmenden Luft ist. Insbesondere dann, wenn die Verbindungsstelle stromab eines in dem Ansaugtrakt angeordneten Verdichters angeordnet ist, mittels welchem die den Ansaugtrakt durchströmende Luft verdichtet wird oder verdichtet ist, kann der Ansaugtraktdruck und somit der Gehäusedruck sehr hoch uns insbesondere gegenüber einem Umgebungsdruck höher sein. Insbesondere handelt es sich es dann bei der den Ansaugtrakt durchströmenden und in dem Gehäuseraum aufgenommenen Luft um die mittels des Verdichters verdichtete Luft, welche auch als Ladeluft bezeichnet wird. Dann wird der Ansaugtraktdruck auch als Ladedruck bezeichnet, sodass der Gehäusedruck der Ladedruck ist oder dem Ladedruck entspricht.

Somit ist beispielsweise der erste Leitungsbereich der Sekundärluftleitung an der Verbindungsstelle fluidisch mit dem Ansaugtrakt verbindbar oder verbunden, und beispielsweise ist der erste Leitungsbereich der Sekundärluftleitung fluidisch mit der Eintrittsöffnung verbunden oder verbindbar. Somit kann beispielsweise der Ansaugtraktdruck über den ersten Leitungsbereich in dem Gehäuseraum insbesondere als der Gehäusedruck wirken und/oder der Ansaugtraktdruck kann über den ersten Leitungsbereich und die Eintrittsöffnung auf das Ventilelement wirken. Mit anderen Worten kann beispielsweise sowohl in der Schließstellung als auch in der Offenstellung zumindest ein Teil der den Ansaugtrakt durchströmenden Luft als die Sekundärluft über den ersten Leitungsbereich und die Eintrittsöffnung in den Gehäuseraum einströmen und somit in dem Gehäuseraum den Gehäusedruck bewirken. Insbesondere kann der Ansaugtraktdruck in der Schließstellung des Ventilelements über den ersten Leitungsbereich und die Eintrittsöffnung auf das Ventilelement wirken. Ein zweiter Leitungsbereich der Sekundärluftleitung ist beispielsweise, insbesondere an einer Einleitstelle, fluidisch mit dem Abgastrakt verbunden oder verbindbar0 und beispielsweise ist der zweite Leitungsbereich fluidisch mit der Austrittsöffnung verbunden. Dadurch kann beispielsweise in der Offenstellung Sekundärluft die Austrittsöffnung durchströmen und somit über die Austrittsöffnung in den zweiten Leitungsbereich einströmen und in der Folge den zweiten Leitungsbereich durchströmen und mittels des zweiten Leitungsbereichs von der Austrittsöffnung zu der Einleitstelle geführt und an der Einleitstelle in den Ansaugtrakt eingeleitet werden.

Die Schließstellung wird auch als erste Stellung bezeichnet oder ist eine erste Stellung des Ventilelements. Die Offenstellung wird auch als zweite Stellung bezeichnet oder ist eine zweite Stellung des Ventilelements. Insbesondere ist es vorgesehen, dass in beiden Stellungen, das heißt sowohl in der Schließstellung als auch in der Offenstellung, die Eintrittsöffnung offen, mithin freigegeben, ist, sodass beispielsweise sowohl in der Schließstellung als auch in der Offenstellung der Gehäusedruck in dem Gehäuseraum und somit in dem Ventilgehäuse, insbesondere auf das Ventilelement, wirken kann, wobei beispielsweise zumindest in der Schließstellung der Gehäusedruck in dem Gehäuseraum und somit in dem Ventilgehäuse dem Ansaugtraktdruck entsprechen kann. Insbesondere kann daher in der Schließstellung der Ansaugtraktdruck über die Eintrittsöffnung, insbesondere direkt, auf das Ventilelement wirken. Zusammengefasst ausgedrückt kann zumindest in der Schließstellung der in dem Gehäuseraum wirkende Gehäusedruck und/oder der über die Eintrittsöffnung und insbesondere den ersten Leitungsbereich auf das Ventilelement wirkende Ansaugtraktdruck sehr hoch sein und insbesondere höher als ein Umgebungsdruck sein, sodass der Gehäusedruck beziehungsweise der Ansaugtraktdruck wesentlich größer als 1 bar sein kann. Das Einleiten der Sekundärluft in den Abgastrakt wird auch als Sekundärlufteinblasung bezeichnet.

Um nun eine besonders vorteilhafte Sekundärlufteinblasung realisieren zu können, ist es erfindungsgemäß vorgesehen, dass die Eintrittsöffnung entlang der Bewegungsrichtung betrachtet, insbesondere vollständig, zwischen zwei Dichtungselementen angeordnet ist, mittels welchen das Ventilelement gegen das Ventilgehäuse abgedichtet ist. Dabei ist das Ventilelement zumindest außenumfangsseitig, insbesondere außenumfangsseitig und innenumfangsseitig und ganz vorzugsweise grundsätzlich, entlang seiner gesamten, zumindest in der Schließstellung entlang der Bewegungsrichtung zwischen den Dichtungselementen verlaufenden Erstreckung frei von einer schräg oder senkrecht zur Bewegungsrichtung verlaufenden Fläche, sodass der beispielsweise zumindest in der Schließstellung außenumfangsseitig auf das Ventilelement wirkende Ansaugtraktdruck und/oder Gehäusedruck keine entlang der Bewegungsrichtung verlaufende, auf das Ventilelement wirkende Kraft und auch keine Kraft bewirkt, die eine entlang der Bewegungsrichtung oder in die Bewegungsrichtung verlaufende Kraftkomponente aufweist. Mit anderen Worten kann durch die Erfindung vermieden werden, dass in der Schließstellung der Ansaugtraktdruck eine parallel oder schräg zur Bewegungsrichtung verlaufende und auf das Ventilelement wirkende Kraft bewirkt, durch die das Ventilelement geöffnet, mithin aus der Schließstellung in die Offenstellung bewegt werden könnte. Dadurch kann das Ventilelement sicher in der Schließstellung gehalten werden, mithin vor einem unerwünschten Öffnen, mithin vor einer unerwünschten Bewegung aus der Schließstellung in die Offenstellung geschützt werden. Wieder mit anderen Worten ausgedrückt können durch die Erfindung unerwünschte, relativ zu dem Ventilgehäuse erfolgende und durch den Gehäusedruck beziehungsweise den Ansaugtraktdruck bewirkte Bewegungen des Ventilelements, insbesondere aus der Schließstellung in die Offenstellung, vermieden werden, sodass beispielsweise das Ventilelement sicher in der Schließstellung verbleibt und sich nicht unerwünschterweise selbständig öffnet. Insbesondere ermöglicht es die Erfindung, die zuvor genannte Verbindungsstelle derart anzuordnen, dass die Verbindungsstelle stromab des Verdichters angeordnet ist, sodass als die Sekundärluft die Ladeluft, das heißt zumindest ein Teil der Ladeluft verwendet werden kann. Durch die Erfindung führt der hohe Gehäusedruck beziehungsweise Ansaugtraktdruck nicht dazu, dass sich das Ventilelement unerwünschterweise öffnet, mithin unerwünschterweise aus der Schließstellung in die Offenstellung bewegt. Dadurch kann eine bedarfsgerechte Sekundärlufteinblasung realisiert werden, und insbesondere kann als die Sekundärluft zumindest ein Teil der Ladeluft verwendet werden, sodass die Sekundärlufteinblasung beispielsweise in besonders vorteilhaften Betriebsbereichen oder insbesondere auch während eines Kaltstarts der Verbrennungskraftmaschine durchgeführt werden kann.

Mittels der Dichtungselemente ist eine der innenumfangsseitigen Mantelfläche zugewandte außenumfangsseitige Mantelfläche des Ventilelements gegen die innenumfangsseitige Mantelfläche des Ventilgehäuses abgedichtet. Hierdurch kann beispielsweise die aus dem Ansaugtrakt stammende Luft beziehungsweise Sekundärluft nicht übermäßig zwischen der innenumfangsseitigen Mantelfläche und der außenumfangsseitigen Mantelfläche hindurchströmen, sodass unerwünschte Strömungen der Luft und somit daraus etwaig resultierende, unerwünschte, auf das Ventilelement wirkende Kräfte, die das Ventilelement öffnen könnten, sicher vermieden werden können. Insbesondere ist die innenumfangsseitige Mantelfläche der außenumfangsseitigen Mantelfläche zugeordnet, insbesondere entlang einer senkrecht zur Bewegungsrichtung verlaufenden Richtung.

Das Ventilelement ist als ein teller- oder scheibenförmiges Ventil ausgebildet und weist ein teller- oder scheibenförmiges Ventilteil und einen Ventilschaft auf, mit welchem das Ventilteil verbunden ist. Außerdem weist das Sekundärluftventil ein drittes Dichtungselement auf, mittels welchem in der Schließstellung das Ventilteil gegen das Ventilgehäuse abgedichtet ist.

Der Erfindung liegen insbesondere die folgenden Erkenntnisse und Überlegungen zugrunde: Herkömmliche Sekundärluftsysteme haben nur einen sehr kleinen, leerlaufnahen Bereich. Dies bedeutet, dass herkömmliche Sekundärluftsysteme nur in einem kleinen, leerlaufnahen Betriebsbereich der Verbrennungskraftmaschine verwendet werden können, um eine Sekundärlufteinblasung durchzuführen. Um jedoch auch während Kaltstarts mit höheren Lasten eine Sekundärlufteinblasung durchführen zu können, ist ein hoher, auch als Sekundärluftdruck bezeichneter Druck der Sekundärluft erforderlich, denn dann und insbesondere nur dann kann die Sekundärluft gegen einen steigenden, auch als Abgasdruck bezeichneten Druck des Abgases in den Abgastrakt eingeblasen werden. Daher ist es von Vorteil, die Sekundärluftleitung, insbesondere den ersten Leitungsbereich, an den Ansaugtrakt und dabei insbesondere an der Verbindungsstelle anzuschließen, mithin die Sekundärluftleitung, insbesondere an den ersten Leitungsbereich, an der Verbindungsstelle fluidisch mit dem Ansaugtrakt zu verbinden, wobei die Verbindungsstelle vorzugsweise stromab des genannten Verdichters angeordnet ist. Dadurch kann als die Sekundärluft zumindest ein Teil der mittels des Verdichters verdichteten Ladeluft verwendet werden, sodass ein besonders hoher Sekundärluftdruck realisiert werden kann. Insbesondere kann dann der Sekundärluftdruck zumindest nahezu dem Ladedruck entsprechen. Insbesondere kann dann der Sekundärluftdruck größer als 2 bar sein. Es wurde jedoch gefunden, dass herkömmliche Sekundärluftventile bei derart hohen Sekundärluftbrücken nicht dicht sind, mithin die Sekundärluftleitung nicht verschlossen halten können, sondern unerwünschterweise und insbesondere selbsttätig bei hohen Sekundärluftdrücken, die beispielsweise größer als 500 mbar sind, öffnen und somit die Sekundärluftleitung unerwünschterweise freigeben, insbesondere ohne dass die herkömmlichen Sekundärluftventile angesteuert werden. Dies kann nun durch die Erfindung vermieden werden, sodass es möglich ist, die Sekundärluftleitung an den Ansaugtrakt anzuschließen und insbesondere als die Sekundärluft zumindest einen Teil der Ladeluft zu verwenden. Ferner wurde gefunden, dass herkömmliche Sekundärluftventile nur bis zu einem Druck von ca. 500 mbar dicht bleiben. Bei demgegenüber höheren Drücken öffnen herkömmliche Sekundärluftventile selbsttätig und unerwünscht, sodass herkömmliche Sekundärluftventile nicht geeignet sind, um als die Sekundärluft Ladeluft zu verwenden, deren Druck größer als 500 mbar, insbesondere größer als 1 bar und ganz insbesondere größer als 2 bar, ist. Dies kann nun jedoch durch die Erfindung realisiert werden.

Um aus dem Gehäusedruck beziehungsweise aus dem Ansaugtraktdruck resultierende, auf das Ventilelement wirkende Kräfte, die das geschlossene Ventilelement öffnen könnten, sicher vermeiden und somit das Ventilelement sicher in der Schließstellung halten zu können, ist es bei einer Ausführungsform der Erfindung vorgesehen, dass das Ventilelement außenumfangsseitig entlang seiner gesamten, zumindest in der Schließstellung entlang der Bewegungsrichtung zwischen den Dichtungselementen verlaufenden Erstreckung zylindrisch ausgebildet ist, mithin die Form eines geraden Kreiszylinders aufweist. Hierdurch ist eine außenumfangsseitig zylindrische Bauform des Ventilelements zumindest über die gesamte, zumindest in der Schließstellung in der Bewegungsrichtung zwischen den Dichtungselementen verlaufende Erstreckung des Ventilelements vorgesehen, sodass der Ansaugtraktdruck beziehungsweise der Gehäusedruck daran gehindert wird, eine Axialkraft, mithin eine entlang der Bewegungsrichtung oder schräg zu Bewegungsrichtung auf das Ventilelement wirkende Kraft, die das Ventilelement öffnen könnte, auszuüben. Somit kann die Sekundärluftleitung, insbesondere der erste Leitungsbereich, vorteilhaft an der vorzugsweise stromab des Verdichters angeordneten Verbindungsstelle fluidisch mit dem Ansaugtrakt verbunden werden, und das Ventilelement kann sicher und geschlossen gehalten werden. Beispielsweise umfasst das Sekundärluftventil ein insbesondere als mechanische Feder ausgebildetes Federelement, mittels welchem beispielsweise das Ventilelement in der Schließstellung zu halten oder gehalten ist. Die Erfindung ermöglicht es, das Ventilelement, insbesondere mittels des Federelements, auch dann besonders vorteilhaft in der Schließstellung zu halten, wenn die aus dem Ansaugtrakt stammende Luft einen hohen Druck wie beispielsweise den Ladedruck aufweist und somit beispielsweise Ladeluft ist.

Das jeweilige Dichtungselement ist vorzugsweise aus Gummi, mithin aus einem elastisch verformbaren Werkstoff gebildet. Beispielsweise liegt das jeweilige Dichtungselement einerseits, insbesondere direkt, an der innenumfangsseitigen Mantelfläche des Ventilgehäuses und andererseits, insbesondere direkt, an der außenumfangsseitigen Mantelfläche des Ventilelements an.

Das Ventilelement und das Ventilgehäuse werden auch als Bauelemente des Sekundärluftventils bezeichnet. Beispielsweise ist das jeweilige Dichtungselement in einer korrespondierenden, jeweiligen Ausnehmung eines der Bauelemente angeordnet, wobei die jeweilige Ausnehmung beispielsweise als eine Nut, insbesondere als eine Ringnut, ausgebildet sein kann. Das jeweilige Dichtungselement ist teilweise in der jeweiligen Ausnehmung angeordnet und ragt beispielsweise, insbesondere entlang einer schräg oder senkrecht zur Bewegungsrichtung verlaufenden Richtung, aus der jeweiligen Ausnehmung heraus, sodass beispielsweise das jeweilige Dichtungselement an der Mantelfläche des jeweils anderen Bauelements, insbesondere direkt, anliegt. Vorzugsweise handelt es sich bei dem einen Bauelement um das Ventilgehäuse, sodass es sich bei dem anderen Bauelement beispielsweise um das Ventilelement handelt. Hierdurch kann eine besonders vorteilhafte Abdichtung realisiert werden, sodass unerwünschte Strömungen der aus dem Ansaugtrakt stammenden Luft sowie unerwünschte, relativ zu dem Ventilgehäuse erfolgende Bewegungen des Ventilelements sicher vermieden werden können.

Um das Ventilelement besonders vorteilhaft gegen das Ventilgehäuse abdichten zu können, ist in weiterer Ausgestaltung der Erfindung vorgesehen, dass die Dichtungselemente separat voneinander ausgebildet und entlang der Bewegungsrichtung voneinander beabstandet sind.

Eine weitere Ausführungsform zeichnet sich dadurch aus, dass die Dichtungselemente an dem Ventilgehäuse gehalten sind, sodass das Ventilelement entlang der Bewegungsrichtung relativ zu dem Ventilgehäuse und relativ zu den Dichtungselementen zwischen der Schließstellung und der Offenstellung, insbesondere translatorisch und ganz insbesondere rein translatorisch, bewegbar ist. Dadurch können unerwünschte Strömungen der Luft und somit unerwünschte, auf das Ventilelement wirkende Kräfte, die das Ventilelement unerwünschterweise öffnen könnten, sicher vermieden werden, sodass eine vorteilhafte, bedarfsgerechte Sekundärlufteinblasung darstellbar ist.

Schließlich hat es sich als besonders vorteilhaft gezeigt, wenn die Eintrittsöffnung eine Durchgangsrichtung aufweist, entlang welcher die Eintrittsöffnung von der über die Eintrittsöffnung in das Ventilgehäuse einströmenden oder eingeströmten Luft durchströmbar ist, wobei die Durchgangsrichtung schräg oder vorzugsweise senkrecht zur Bewegungsrichtung verläuft. Dadurch können unerwünschte, übermäßige, auf das Ventilelement wirkende Kräfte, die das Ventilelement relativ zu dem Ventilgehäuse entlang der Bewegungsrichtung bewegen könnten, vermieden werden, sodass eine besonders vorteilhafte und bedarfsgerechte Sekundärlufteinblasung darstellbar ist.

Ein zweiter Aspekt betrifft eine auch als Verbrennungsmotor oder Brennkraftmaschine bezeichnete Verbrennungskraftmaschine für ein Kraftfahrzeug, wobei die Verbrennungskraftmaschine ein Sekundärluftsystem aufweist, welches wenigstens ein Sekundärluftventil gemäß dem ersten Aspekt der Erfindung umfasst. Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt.

Eine Ausführungsform des zweiten Aspekts der Erfindung zeichnet sich dadurch aus, dass die Verbrennungskraftmaschine den zuvor genannten Abgastrakt und den zuvor genannten, von der Frischluft durchströmbaren Ansaugtrakt aufweist, mittels welchem die den Ansaugtrakt durchströmende Frischluft (Luft) in den jeweiligen Brennraum der Verbrennungskraftmaschine einleitbar ist. Das Sekundärluftsystem weist die genannte Sekundärluftleitung auf, welche an der stromauf des Brennraums angeordneten Verbindungsstelle fluidisch mit dem Ansaugtrakt verbunden oder verbindbar ist. Somit ist mittels der Sekundärluftleitung zumindest ein Teil der den Ansaugtrakt durchströmenden Frischluft an der Verbindungsstelle an dem Ansaugtrakt abzweigbar und als die Sekundärluft unter Umgehung des jeweiligen Brennraums in den Abgastrakt einleitbar. Das Sekundärluftleitung weist außerdem das Sekundärluftventil auf, welches in der Sekundärluftleitung angeordnet ist. Dadurch kann eine besonders vorteilhafte Sekundärlufteinblasung dargestellt werden.

Eine weitere Ausführungsform des zweiten Aspekts der Erfindung zeichnet sich dadurch aus, dass in dem Ansaugtrakt der genannte Verdichter zum Verdichten der den Ansaugtrakt durchströmenden Frischluft angeordnet ist, wobei die Verbindungsstelle stromab des Verdichters angeordnet ist. Dadurch kann auf besonders einfache Weise ein besonders hoher Druck der Sekundärluft realisiert werden, wobei es die Erfindung ermöglicht, dass das Ventilelement sicher in der Schließstellung verbleibt.

Ein dritter Aspekt der Erfindung betrifft ein auch als Fahrzeug bezeichnetes Kraftfahrzeug, welches eine Verbrennungskraftmaschine gemäß dem zweiten Aspekt aufweist und mittels der Verbrennungskraftmaschine antreibbar ist. Vorteile und vorteilhafte Ausgestaltungen des ersten Aspekts und des zweiten Aspekts der Erfindung sind als Vorteile und vorteilhafte Ausgestaltungen des dritten Aspekts der Erfindung anzusehen und umgekehrt.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine schematische Darstellung einer Verbrennungskraftmaschine eines Kraftfahrzeugs; und
- Fig. 2: eine schematische Längsschnittansicht eines Sekundärluftventils eines Sekundärluftsystems der Verbrennungskraftmaschine, wobei sich ein Ventilelement des Sekundärluftventils in einer Offenstellung befindet; und
- Fig. 3: eine schematische Längsschnittansicht des Sekundärluftventils, wobei sich das Ventilelement in einer Schließstellung befindet.

In den Fig. sind gleiche oder funktionsgleiche Elemente mit gleichen Bezugszeichen versehen.

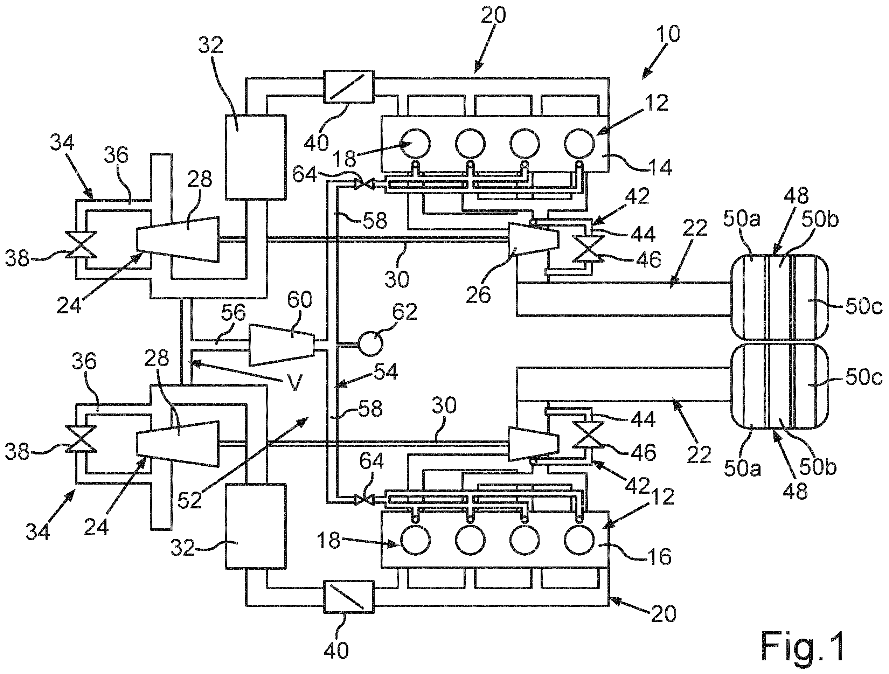

Fig. 1 zeigt in einer schematischen Darstellung eine Verbrennungskraftmaschine 10 eines einfach auch als Fahrzeug bezeichneten Kraftfahrzeugs, welches mittels der Verbrennungskraftmaschine 10 antreibbar ist. Die Verbrennungskraftmaschine 10 weist ein beispielsweise als Zylinderkurbelgehäuse ausgebildetes und auch als Motorblock bezeichnetes Zylindergehäuse 12 auf, welches vorliegend beispielsweise zwei Zylinderbänke 14 und 16 mit jeweils wenigstens oder genau vier Zylindern 18 aufweist. Durch den jeweiligen Zylinder 18 ist ein jeweiliger Brennraum der Verbrennungskraftmaschine 10 gebildet oder begrenzt, sodass bei dem in Fig. 1 gezeigten Ausführungsbeispiel die Verbrennungskraftmaschine 10 genau acht Brennräume aufweist. Die Verbrennungskraftmaschine 10 weist einen Ansaugtrakt 20 auf, welcher von Luft, welche auch als Frischluft bezeichnet wird, durchströmbar ist. Mittels des Ansaugtrakts 20 wird die den Ansaugtrakt 20 durchströmende Frischluft zu den und in die Brennräume geleitet. Die Verbrennungskraftmaschine 10 weist auch einen Abgastrakt 22 auf, welcher von Abgas der Verbrennungskraftmaschine 10, mithin von Abgas aus den Brennräumen durchströmbar ist. Je Zylinderbank 14, 16 ist ein Abgasturbolader 24 vorgesehen, welcher eine jeweilige, in dem Abgastrakt 22 angeordnete Turbine 26 und einen jeweiligen, in dem Ansaugtrakt 20 angeordneten Verdichter 28 aufweist. Die jeweilige Turbine 26 ist von dem den Abgastrakt 22 durchströmenden Abgas antreibbar. Der jeweilige Verdichter 28 des jeweiligen Abgasturboladers 24 kann, insbesondere über eine jeweilige Welle 30 des jeweiligen Abgasturboladers 24, von der jeweiligen Turbine 26 des jeweiligen Abgasturboladers 24 angetrieben werden. Durch Antreiben des jeweiligen Verdichters 28 wird mittels des jeweiligen Verdichters 28 die den Ansaugtrakt 20 durchströmende Frischluft verdichtet. Die mittels des jeweiligen Verdichters 28 verdichtete Frischluft wird auch als Ladeluft bezeichnet. In dem Ansaugtrakt 20 ist stromab des jeweiligen Verdichters 28 ein jeweiliger Ladeluftkühler 32 angeordnet, mittels welchem die verdichtete und dadurch erwärmte Ladeluft gekühlt wird. Je Verdichter 28 ist ein jeweiliges Schubumluftsystem 34 mit einer jeweiligen Schubumluftleitung 36 und einem jeweiligen, an der jeweiligen Schubumluftleitung 36 angeordneten Schubumluftventil 38 vorgesehen. Außerdem ist in dem Ansaugtrakt 20 je Zylinderbank 14, 16 eine jeweilige Drosselklappe 40 angeordnet, welche stromab des jeweiligen Ladeluftkühlers 32 angeordnet ist.

Der jeweiligen Turbine 26 ist eine jeweilige Umgehungseinrichtung 42 mit einer jeweiligen Umgehungsleitung 44 und einem jeweiligen, in der jeweiligen Umgehungsleitung 44 angeordneten Umgehungsventil 46 zugeordnet. Über die jeweilige Umgehungsleitung 44 kann zumindest ein Teil des den Abgastrakt 22 durchströmenden Abgases die jeweilige Turbine 26 umgehen, wobei beispielsweise mittels des jeweiligen Umgehungsventils 46 eine die jeweilige Umgehungsleitung 44 durchströmende und somit die jeweilige Turbine 26 umgehende Menge des Abgases einstellbar ist. Das jeweilige Umgehungsventil 46 wird auch als Waste-Gate oder Waste Gate-Ventil bezeichnet.

Stromab der jeweiligen Turbine 26 ist im Abgastrakt 22 eine jeweilige Abgasnachbehandlungseinrichtung 48 angeordnet. Die jeweilige Abgasnachbehandlungseinrichtung 48 umfasst Abgasnachbehandlungselemente 50a-c, mittels welchen das Abgas nachbehandelt wird. Beispielsweise ist oder umfasst das Abgasnachbehandlungselement 50a einen Katalysator, insbesondere einen Drei-Wege-Katalysator. Beispielsweise ist oder umfasst das jeweilige Abgasnachbehandlungselement 50b einen Partikelfilter. Beispielsweise ist die Verbrennungskraftmaschine 10 als ein Ottomotor ausgebildet, sodass der Partikelfilter beispielsweise als ein Ottopartikelfilter (OPF) ausgebildet ist. Beispielsweise ist oder umfasst das jeweilige Abgasnachbehandlungselement 50c einen jeweiligen, insbesondere weiteren Katalysator, insbesondere einen Drei-Wege-Katalysator. Das jeweilige Abgasnachbehandlungselement 50a-c wird auch als Abgasnachbehandlungskomponente bezeichnet.

Die Verbrennungskraftmaschine 10 weist außerdem ein Sekundärluftsystem 52 auf. Das Sekundärluftsystem 52 weist eine Sekundärluftleitung 54 auf. Die Sekundärluftleitung 54 weist einen ersten Leitungsbereich 56 auf, welcher an einer Verbindungsstelle V fluidisch mit dem Ansaugtrakt 20 verbunden ist. Es ist erkennbar, dass die Verbindungsstelle V stromauf der Brennräume und stromab der Verdichter 28 angeordnet ist. Je Zylinderbank 14, 16 weist die Sekundärluftleitung 54 einen zweiten Leitungsbereich 58 auf. Der Leitungsbereich 56 ist ein den Leitungsbereichen 58 gemeinsamer Leitungsbereich. Die Sekundärluftleitung 54 ist von Sekundärluft durchströmbar, wobei die zunächst den Leitungsbereich 56 durchströmende Sekundärluft auf die Leitungsbereiche 58 aufgeteilt, mithin auf jeweilige, die Leitungsbereiche 58 durchströmende Teilströmungen aufgeteilt wird. Mittels der Sekundärluftleitung 54 wird die die Sekundärluftleitung 54 durchströmende Sekundärluft insbesondere unter Umgehung der beziehungsweise aller Brennräume in den Abgastrakt 22 eingeleitet, und zwar an jeweiligen, stromab der Brennräume angeordneten Einleitstellen, an denen die Sekundärluftleitung 54 mit dem Abgastrakt 22 fluidisch verbunden ist. Insbesondere ist der jeweilige, zweite Leitungsbereich 58 an der jeweiligen Einleitstelle fluidisch mit dem Abgastrakt 22 verbunden. Aus Fig. 1 ist erkennbar, dass beispielsweise je Brennraum, insbesondere wenigstens oder genau, eine Einleitstelle vorgesehen ist, an welcher die Sekundärluftleitung 54, insbesondere der jeweilige, zweite Leitungsbereich 58, fluidisch mit dem Abgastrakt 22 verbunden ist.

Das Sekundärluftsystem 52 weist eine einfach auch als Pumpe bezeichnete Sekundärluftpumpe 60 auf, mittels welcher beispielsweise die Sekundärluft durch die Sekundärluftleitung 54 hindurchgefördert werden kann. Beispielsweise ist oder arbeitet die Sekundärluftpumpe 60 als ein Zusatzverdichter, mittels welchem die Sekundärluft verdichtet wird oder zu verdichten ist. Beispielsweise ist die Sekundärluftpumpe 60 eine elektrische Pumpe, mithin eine elektrisch betreibbare Pumpe, sodass beispielsweise die Sekundärluftpumpe 60 als ein elektrischer Zusatzverdichter ausgebildet ist.

Da die Verbindungsstelle V stromauf der beziehungsweise aller Brennräume der Verbrennungskraftmaschine 10 und stromab der Verdichter 28 angeordnet ist, kann mittels der Sekundärluftleitung 54 zumindest ein Teil der den Ansaugtrakt 20 durchströmenden Ladeluft an der Verbindungsstelle V aus dem Ansaugtrakt 20 abgezweigt und als die Sekundärluft unter Umgehung aller Brennräume der Verbrennungskraftmaschine in den Abgastrakt 22 eingeleitet werden. Da die Sekundärluftpumpe 60 stromab der Verbindungsstelle V angeordnet ist, wird beispielsweise die bereits mittels der Verdichter 28 verdichtete und als die Sekundärluft verwendete Luft nochmals oder weiter verdichtet, sodass die die Sekundärluftleitung 54 durchströmende Sekundärluft verdichtete Luft ist.

In der Sekundärluftleitung 54 ist ein Drucksensor 62 des Sekundärluftsystems 52 angeordnet. Mittels des Drucksensors 62 kann ein Druck der Sekundärluft insbesondere stromab der Sekundärluftpumpe 60 und stromauf der Einleitstellen erfasst werden.

In dem jeweiligen, zweiten Leitungsbereich 58 ist ein jeweiliges Sekundärluftventil 64 des Sekundärluftsystems 52 angeordnet, sodass das jeweilige Sekundärluftventil 64 (SLV) in der Sekundärluftleitung 54 angeordnet ist. Somit ist je Zylinderbank 14, 16 ein jeweiliges Sekundärluftventil 64 vorgesehen. Es ist erkennbar, dass das jeweilige Sekundärluftventil 64 stromauf der jeweiligen Einleitstelle und stromab der Sekundärluftpumpe 60, insbesondere stromab des Drucksensors 62, angeordnet ist.

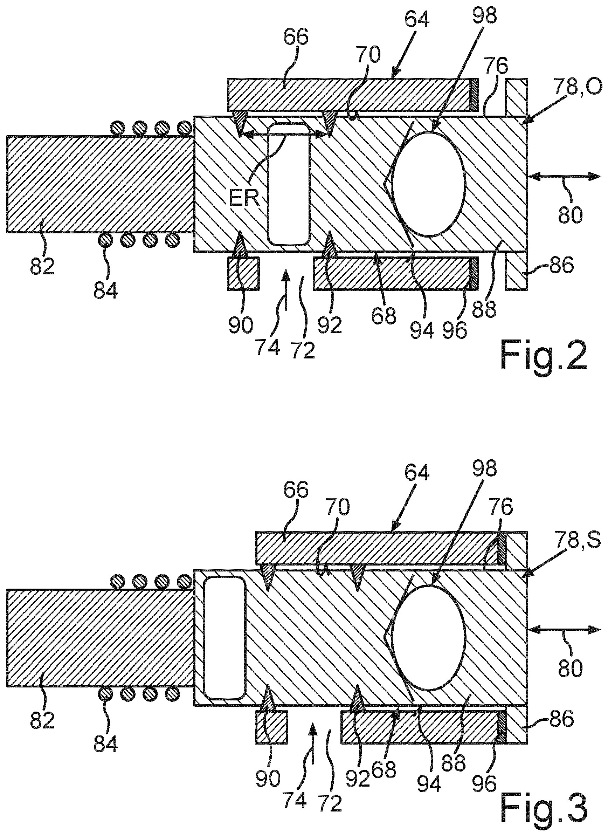

Das jeweilige Sekundärluftventil 64 ist in einer jeweiligen, schematischen Längsschnittansicht in den Fig. 2 und 3 gezeigt. Aus Fig. 2 und 3 ist erkennbar, dass das Sekundärluftventil 64 ein Ventilgehäuse 66 aufweist, welches einen auch als Aufnahmeraum oder Ventilraum bezeichneten Gehäuseraum 68 aufweist, insbesondere begrenzt und ganz insbesondere direkt begrenzt. Der Gehäuseraum 68 ist durch eine innenumfangsseitige Mantelfläche 70 des Ventilgehäuses 66direkt begrenzt. Der Gehäuseraum 68 ist zylindrisch. Das Ventilgehäuse 66, insbesondere der Gehäuseraum 68, ist von der die Sekundärluftleitung 54, insbesondere den jeweiligen, zweiten Leitungsbereich 58, durchströmenden Sekundärluft durchströmbar, sodass die Sekundärluft auf ihrem Weg von der Verbindungsstelle V zu der jeweiligen Einleitstelle und somit zu dem Abgastrakt 22 durch die Sekundärluftleitung 54 und somit durch das Ventilgehäuse 66, insbesondere durch den Gehäuseraum 68, hindurchströmt.

Das Ventilgehäuse 66, weist, insbesondere genau, eine Eintrittsöffnung 72 auf, über welche die Sekundärluft in das Ventilgehäuse 66 und somit in den Gehäuseraum 68 einströmen, das heißt eingeleitet werden kann. Dies ist in Fig. 2 durch einen Pfeil 74 veranschaulicht. Des Weiteren weist das Ventilgehäuse 66, insbesondere genau, eine Austrittsöffnung 76 auf, über welche die über die Eintrittsöffnung 72 in das Ventilgehäuse 66 und somit in den Aufnahmeraum (Gehäuseraum 68) eingeströmte Sekundärluft aus dem Ventilgehäuse 66, insbesondere aus dem Sekundärluftventil 64 insgesamt, abgeführt oder ausgeleitet werden kann, mithin ausströmen kann.

Das Sekundärluftventil 64 weist außerdem ein Ventilelement 78 auf, welches entlang einer in Fig. 2 durch einen Doppelpfeil 80 veranschaulichten Bewegungsrichtung relativ zu dem Ventilgehäuse 66 zwischen einer die Austrittsöffnung 76 verschließenden Schließstellung S (Fig. 3) und wenigstens einer die Austrittsöffnung 76 freigebenden Offenstellung O (Fig. 2) translatorisch bewegbar ist. Es ist erkennbar, dass in der Schließstellung S das Ventilelement 78 die auch als Ausströmöffnung bezeichnete Austrittsöffnung 76 verschließt, mithin fluidisch versperrt. In der Offenstellung O gibt das Ventilelement 78 die Austrittsöffnung 76 frei. Außerdem ist aus Fig. 2 und 3 erkennbar, dass sowohl in der Schließstellung S als auch in der Offenstellung O, die zusammenfassend auch als Stellungen bezeichnet werden, die Eintrittsöffnung 72 offen, mithin freigegeben und somit von insbesondere aus dem Ansaugtrakt 20 stammender Luft durchströmbar ist. Mit anderen Worten, in beiden Stellungen ist der Gehäuseraum 68 über die in beiden Stellungen freigegebene, mithin offene Eintrittsöffnung 72 fluidisch mit dem Ansaugtrakt 20 verbunden, sodass in der Schließstellung S aus dem Ansaugtrakt 20 stammende und beispielsweise mittels des jeweiligen Verdichters 28 verdichtete Luft die Eintrittsöffnung 72 durchströmen und somit über die Eintrittsöffnung 72 in den Gehäuseraum 68 einströmen beziehungsweise auf das Ventilelement 78 wirken kann. Somit ist beispielsweise in der Schließstellung S des Ventilelements 78 zumindest in einem Teil des Gehäuseraums 68 und somit zumindest in einem Teil des Ventilgehäuses 66 Luft aufgenommen, die aus dem Ansaugtrakt 20 stammt und insbesondere dann, wenn die Verbrennungskraftmaschine 10 betrieben wird, Ladeluft, das heißt ein Teil der Ladeluft beziehungsweise ein Teil der mittels des Verdichters 28 verdichteten Luft ist. Mit anderen Worten wirkt in der Schließstellung S des Ventilelements 78 aus dem Ansaugtrakt 20 stammende Luft, die insbesondere dann, wenn die Verbrennungskraftmaschine 10 betrieben wird, Ladeluft, das heißt ein Teil der Ladeluft beziehungsweise ein Teil der mittels des Verdichters 28 verdichteten Luft ist. Somit weist die in der Schließstellung S des Ventilelements 78 zumindest in dem Teil des Gehäuseraums 68 aufgenommene und auch als Gehäuseluft bezeichnete Luft beziehungsweise die in der Schließstellung S des Ventilelements 78 über die Eintrittsöffnung 72 auf das Ventilelement 78 wirkende und aus dem Ansaugtrakt 20 stammende Luft einen hohen Druck auf, da beispielsweise die Gehäuseluft beziehungsweise die in der Schließstellung S des Ventilelements 78 auf das Ventilelement 78 über die Eintrittsöffnung 72 wirkende Luft die Ladeluft beziehungsweise ein Teil der Ladeluft ist.

Das Sekundärluftventil 64 weist einen vorliegend als Hubmagneten ausgebildeten Aktor 82 auf, welcher mit elektrischer Energie versorgbar und dadurch elektrisch ansteuerbar ist. Mit anderen Worten kann der Aktor 82 mit elektrischer Energie, das heißt mit elektrischem Strom versorgt werden, was auch als Bestromen des Aktors 82 bezeichnet wird. Das Sekundärluftventil 64 weist außerdem ein Federelement 84 auf, welches vorliegend als mechanische Feder und somit als ein Festkörper ausgebildet ist. Beispielsweise ist das Federelement 84 eine Schraubenfeder. Durch Bestromen des Aktors 82, das heißt durch Versorgen des Aktors 82 mit elektrischer Energie, kann das sich zunächst in der Schließstellung S befindende Ventilelement 78 mittels des Aktors 82 aus der Schließstellung S in die Offenstellung O bewegt, mithin geöffnet werden. Hierdurch wird das Federelement 84 gespannt, wodurch das Federelement 84 eine Federkraft bereitstellt, mittels welcher das Ventilelement 78 aus der Offenstellung O in die Schließstellung S bewegbar, mithin zu schließen ist. Wird beispielsweise das Bestromen des Aktors 82 beendet, so wird das Ventilelement 78 mittels der Federkraft des Federelements 84 aus der Offenstellung O in die Schließstellung S bewegt. Beispielsweise ist das Federelement 84 in der Schließstellung S gespannt, sodass das Federelement 84 auch in der Schließstellung S eine Federkraft bereitstellt, mittels welcher das Ventilelement 78 in der Schließstellung S gehalten wird. Somit ist das Sekundärluftventil 64 in unbestromtem Zustand des Aktors 82 geschlossen. Durch Bestromen des Aktors 82 wird mittels des Aktors 82 das Ventilelement 78 entgegen der Federkraft des Ventilelements 84 geöffnet.

Das Ventilelement 78 ist als ein teller- oder scheibenförmiges Ventil ausgebildet und weist dabei ein teller- oder scheibenförmiges Ventilteil 86 auf. Außerdem weist das Ventilelement 78 einen Ventilschaft 88 auf, mit welchem das Ventilteil 86 verbunden ist. Dabei ist es denkbar, dass das Ventilteil 86 und der Ventilschaft 88, welche auch als Stange oder Kolbenstange bezeichnet wird, separat voneinander ausgebildet und miteinander verbunden sind, oder aber das Ventilteil 86 und der Ventilschaft 88 sind einstückig miteinander ausgebildet, mithin aus einem einzigen Stück gebildet. Der Ventilschaft 88 und das Ventilteil 86, mithin das Ventilelement 78 sind gemeinsam entlang der Bewegungsrichtung relativ zu dem Ventilgehäuse 66 translatorisch aus der Schließstellung S in die Offenstellung O sowie von der Offenstellung O in die Schließstellung S bewegbar. Beispielsweise sind die Offenstellung O und die Schließstellung S jeweilige Endstellungen, wobei das Ventilelement 78 in die jeweilige Endstellung, jedoch nicht über die jeweilige Endstellung hinaus bewegt werden kann. Insbesondere kann der Aktor 82 den Ventilschaft 88 und über diesen das Ventilteil 86 antreiben und somit relativ zu dem Ventilgehäuse 66 bewegen, insbesondere öffnen.

Ferner kann die Federkraft des Federelements 84 den Ventilschaft 88 und über diesen das Ventilteil 86 antreiben und somit schließen.

Da die Eintrittsöffnung 72 in der Schließstellung S offen ist, und da somit der Gehäuseraum 68 über die Eintrittsöffnung 72 in der Schließstellung S fluidisch mit dem Ansaugtrakt 20 verbunden ist, ist das Ventilelement 78 insbesondere über den Ventilschaft 88 in der Schließstellung S mit der über die Eintrittsöffnung 72 in das Ventilgehäuse 66 und somit in den Gehäuseraum 68 eingeströmten und/oder in dem Ventilgehäuse 66 aufgenommenen Gehäuseluft direkt beaufschlagbar oder beaufschlagt und/oder die aus dem Ansaugtrakt 20 stammende Luft wirkt in der Schließstellung S über die Eintrittsöffnung 72 auf den Ventilschaft 88 und somit auf das Ventilelement 78.

Um nun ein unerwünschtes Öffnen des Sekundärluftventils 64 vermeiden und in der Folge eine besonders vorteilhafte Sekundärluft einblasen und realisieren zu können, ist es bei dem Sekundärluftventil 64 vorgesehen, dass die Eintrittsöffnung 72 entlang der Bewegungsrichtung betrachtet zwischen zwei Dichtungselementen 90 und 92 angeordnet ist, mittels welchen eine der innenumfangsseitigen Mantelfläche 70 zugewandte, außenumfangsseitige Mantelfläche 94 des Ventilelements 78 gegen die innenumfangsseitige Mantelfläche 70 des Ventilgehäuses 66 abgedichtet ist. Dadurch kann beispielsweise vermieden werden, dass eine übermäßige Menge der über die Eintrittsöffnung 72 auf das Ventilelement 78, insbesondere auf die Mantelfläche 94, wirkenden Luft über die Dichtungselemente 90 und 92 hinaus zwischen den Mantelflächen 70 und 94 hindurchströmt. Außerdem ist es vorgesehen, dass das Ventilelement 78 außenumfangsseitig, das heißt an seiner außenumfangsseitigen Mantelfläche 94 entlang seiner gesamten, zumindest in der Schließstellung S entlang der Bewegungsrichtung zwischen den Dichtungselementen 90 und 92 verlaufenden Erstreckung ER frei von einer schräg oder senkrecht zur Bewegungsrichtung verlaufenden Fläche ist. Mit anderen Worten weist die außenumfangsseitige Mantelfläche 94 des Ventilelements 78 über ihre gesamte, zumindest in der Schließstellung S entlang der Bewegungsrichtung zwischen den Dichtungselementen 90 und 92 verlaufende Erstreckung E keine Fläche auf, die sich in einer Ebene erstreckt, die schräg oder senkrecht zur Bewegungsrichtung (Doppelpfeil 80) verläuft. Dadurch kann verhindert werden, dass die in der Schließstellung S über die Eintrittsöffnung 72 direkt auf das Ventilelement 78, insbesondere die Mantelfläche 94, wirkende und aus dem Ansaugtrakt 20 stammende Luft eine auf das Ventilelement 78 wirkende Kraft ausübt, die eine entlang der Bewegungsrichtung verlaufende Kraftkomponente aufweist und somit das Ventilelement 78 öffnen könnte. Somit kann das Ventilelement 78 insbesondere mittels des Federelements 84 sicher in der Schließstellung S gehalten werden.

Bei dem in den Figuren gezeigten Ausführungsbeispiel ist es vorgesehen, dass das Ventilelement 78 außenumfangsseitig, mithin die Mantelfläche 94 entlang seiner beziehungsweise ihrer gesamten, zumindest in der Schließstellung S entlang der Bewegungsrichtung zwischen den Dichtungselementen 90 und 92 verlaufenden Erstreckung ER zylindrisch ausgebildet ist und somit die Form eines geraden Kreiszylinders aufweist.

Bei dem in den Figuren gezeigten Ausführungsbeispiel sind die beispielsweise aus Gummi gebildeten Dichtungselemente 90 und 92 separat voneinander ausgebildet und dann entlang der Bewegungsrichtung, insbesondere vollständig, voneinander beabstandet. Beispielsweise sind die Dichtungselemente 90 und 92 an dem Ventilgehäuse 66 gehalten, sodass das Ventilelement 78 entlang der Bewegungsrichtung relativ zu dem Ventilgehäuse 66 und relativ zu den Dichtungselementen 90 und 92 zwischen der Schließstellung S und der Offenstellung O bewegbar ist.

Die Eintrittsöffnung 72 weist eine durch den Pfeil 74 veranschaulichte Durchgangsrichtung auf, entlang welcher die Eintrittsöffnung 72 von der Gehäuseluft beziehungsweise der Sekundärluft durchströmbar ist oder durchströmt wird. Dabei verläuft die Durchgangsrichtung senkrecht zur Bewegungsrichtung.

Das Sekundärluftventil 64 weist außerdem ein drittes Dichtungselement 96 auf, welches beispielsweise separat von dem Ventilgehäuse 66 und separat von dem Ventilelement 78 ausgebildet sein kann. Alternativ oder zusätzlich ist das Dichtungselement 96 separat von dem Dichtungselement 90 und/oder separat von dem Dichtungselement 92 ausgebildet und von dem Dichtungselement 90 und/oder von dem Dichtungselement 92, insbesondere vollständig, beabstandet. Das Dichtungselement 96 kann aus einem Gummi gebildet sein. In der Schließstellung S liegt das Dichtungselement 96 an dem Ventilgehäuse 66 und an dem Ventilelement 78, insbesondere an dem Ventilteil 86, jeweils direkt an, sodass in der Schließstellung S das Ventilelement 78, insbesondere das Ventilteil 86, mittels des Dichtungselements 96 gegen das Ventilgehäuse 66 abgedichtet ist. Dadurch können übermäßige Leckagen vermieden werden.

Ferner ist es vorzugsweise vorgesehen, dass das Dichtungselement 90 und/oder das Dichtungselement 92 separat von dem Ventilelement 78 und separat von dem Ventilgehäuse 66 ausgebildet ist. Das jeweilige Dichtungselement 90, 92 liegt einerseits, insbesondere direkt, an dem Ventilgehäuse 66, insbesondere einer Mantelfläche 70, an, und vorzugsweise liegt das jeweilige Dichtungselement 90, 92 andererseits, insbesondere direkt, an dem Ventilelement 78, insbesondere an dem Ventilschaft 88 und ganz insbesondere an der Mantelfläche 94, an. Dadurch kann eine besonders vorteilhafte Abdichtung gewährleistet werden.

Das Sekundärluftventil 64 weist außerdem ein Rückschlagventil 98 auf, welches, insbesondere entlang der Bewegungsrichtung betrachtet, zwischen dem Ventilelement 78, insbesondere dem Ventilteil 86, und der Eintrittsöffnung 72 angeordnet ist.

Das Rückschlagventil 98 kann weiter abwärts in der Strömung Richtung Auslasskanal angeordnet sein. Es muss ebenfalls nicht zwingend im Sekundärluftventil verbaut sein und könnte in nachgelagerten Bauteile untergebracht sein.

## Patentansprüche

1. Sekundärluftventil (64) für ein Sekundärluftsystem (52) einer Verbrennungskraftmaschine (10), mit:
- einem von in einen Abgastrakt (22) der Verbrennungskraftmaschine (10) einzuleitender Sekundärluft durchströmbaren Ventilgehäuse (66), welches aufweist:
∘ einen zylindrischen Gehäuseraum (68), welcher durch eine innenumfangsseitige Mantelfläche (70) des Ventilgehäuses (66) direkt begrenzt ist;
∘ eine Eintrittsöffnung (72), über welche die Sekundärluft in das Ventilgehäuse (66) und in den Gehäuseraum (68) einleitbar ist; und
∘ eine Austrittsöffnung (76) aufweist, über welche zum Einleiten der Sekundärluft in den Abgastrakt (22) die Sekundärluft aus dem Ventilgehäuse (66) abführbar ist, und
- einem Ventilelement (78), welches entlang einer Bewegungsrichtung (80) relativ zu dem Ventilgehäuse (66) zwischen einer die Austrittsöffnung (76) verschließenden Schließstellung (S) und wenigstens einer die Austrittsöffnung (76) freigebenden Offenstellung (O) bewegbar ist,
**dadurch gekennzeichnet, dass**:
- die Eintrittsöffnung (72) entlang der Bewegungsrichtung (80) zwischen zwei Dichtungselementen (90, 92) angeordnet ist, mittels welchen eine der innenumfangsseitigen Mantelfläche (70) zugewandte außenumfangsseitige Mantelfläche (94) des Ventilelements (78) gegen die innenumfangsseitige Mantelfläche (70) des Ventilgehäuses (66) abgedichtet ist;
- das Ventilelement (78) als ein teller- oder scheibenförmiges Ventil ausgebildet ist und ein teller- oder scheibenförmiges Ventilteil (86) und einen Ventilschaft (88) aufweist, mit welchem das Ventilteil (86) verbunden ist;
- das Sekundärluftventil (64) ein drittes Dichtungselement (96) aufweist, mittels welchem in der Schließstellung (S) das Ventilteil (86) gegen das Ventilgehäuse (66) abgedichtet ist; und
- das Ventilelement (78) zumindest außenumfangsseitig entlang seiner gesamten, zumindest in der Schließstellung (S) entlang der Bewegungsrichtung (80) zwischen den Dichtungselementen (90, 92) verlaufenden Erstreckung (ER) frei von einer schräg oder senkrecht zur Bewegungsrichtung (80) verlaufenden Fläche ist.

2. Sekundärluftventil (64) nach Anspruch 1,
**dadurch gekennzeichnet, dass**
das Ventilelement (78) außenumfangsseitig entlang seiner gesamten, zumindest in der Schließstellung (S) entlang der Bewegungsrichtung (80) zwischen den Dichtungselementen (90, 92) verlaufenden Erstreckung (ER) zylindrisch ausgebildet ist.

3. Sekundärluftventil (64) nach Anspruch 1 oder 2,
**dadurch gekennzeichnet, dass**
die Dichtungselemente (90, 92) separat voneinander ausgebildet und entlang der Bewegungsrichtung (80) voneinander beabstandet sind.

4. Sekundärluftventil (64) nach einem der vorhergehenden Ansprüche,
**dadurch gekennzeichnet, dass**
die Dichtungselemente (90, 92) an dem Ventilgehäuse (66) gehalten sind, sodass das Ventilelement (78) entlang der Bewegungsrichtung (80) relativ zu dem Ventilgehäuse (66) und relativ zu den Dichtungselementen (90, 92) zwischen der Schließstellung (S) und der Offenstellung (O) bewegbar ist.

5. Sekundärluftventil (64) nach einem der vorhergehenden Ansprüche,
**dadurch gekennzeichnet, dass**
die Eintrittsöffnung (72) eine Durchgangsrichtung (74) aufweist, entlang welcher die Eintrittsöffnung (72) von der über die Einströmöffnung (72) in das Ventilgehäuse (66) einströmenden Luft durchströmbar ist, wobei die Durchgangsrichtung (74) schräg oder senkrecht zur Bewegungsrichtung (80) verläuft.

6. **Verbrennungskraftmaschine** (10) für ein Kraftfahrzeug, mit einem Sekundärluftsystem (52), welches wenigstens ein Sekundärluftventil (64) nach einem der vorhergehenden Ansprüche aufweist.

7. Verbrennungskraftmaschine (10) nach Anspruch 6,
**dadurch gekennzeichnet, dass**
die Verbrennungskraftmaschine (10) aufweist:
- den Abgastrakt (22); und
- einen von Luft durchströmbaren Ansaugtrakt (20), mittels welchem die den Ansaugtrakt (20) durchströmende Luft in wenigstens einen Brennraum (18) der Verbrennungskraftmaschine (10) einleitbar ist, wobei das Sekundärluftsystem (52) aufweist:
∘ eine Sekundärluftleitung (54), welche an einer stromauf des Brennraums (18) angeordneten Verbindungsstelle (V) fluidisch mit dem Ansaugtrakt (20) verbunden oder verbindbar ist, sodass mittels der Sekundärluftleitung (54) zumindest ein Teil der den Ansaugtrakt (20) durchströmenden Luft an der Verbindungsstelle (V) aus dem Ansaugtrakt (20) abzweigbar und als die Sekundärluft unter Umgehung des Brennraums (18) in den Abgastrakt (22) einleitbar ist; und
∘ das Sekundärluftventil (64), welches in der Sekundärluftleitung (54) angeordnet ist.

8. Verbrennungskraftmaschine (10) nach Anspruch 7,
**dadurch gekennzeichnet, dass**
in dem Ansaugtrakt (20) ein Verdichter (28) zum Verdichten der den Ansaugtrakt (20) durchströmenden Luft angeordnet ist, wobei die Verbindungsstelle (V) stromab des Verdichters (28) angeordnet ist.

9. Kraftfahrzeug, mit einer Verbrennungskraftmaschine (10) nach einem der Ansprüche 6 bis 8.

## Claims

1. Secondary air valve (64) for a secondary air system (52) of an internal combustion engine (10), the secondary air valve comprising:
- a valve housing (66) through which secondary air to be introduced into an exhaust tract (22) of the internal combustion engine (10) can flow and which has:
∘ a cylindrical housing chamber (68) which is directly bounded by a lateral surface (70) of the valve housing (66) on the inner circumferential side;
∘ an inlet opening (72) through which the secondary air can be introduced into the valve housing (66) and into the housing chamber (68); and
∘ an outlet opening (76) through which the secondary air from the valve housing (66) can be discharged to introduce the secondary air into the exhaust tract (22), and
- a valve element (78) which can be moved, in a direction of movement (80), relative to the valve housing (66) between a closed position (S) which closes the outlet opening (76) and at least one open position (O) which releases the outlet opening (76),
**characterized in that:**
- the inlet opening (72) is arranged, in the direction of movement (80), between two sealing elements (90, 92) by means of which a lateral surface (94) of the valve element (78) on the outer circumferential surface and facing the lateral surface (70) on the inner circumferential surface is sealed off from the lateral surface (70) of the valve housing (66) on the inner circumferential surface;
- the valve element (78) is designed as a plate-shaped or disk-shaped valve and has a plate-shaped or disk-shaped valve part (86) and a valve stem (88) to which the valve part (86) is connected;
- the secondary air valve (64) has a third sealing element (96) by means of which, in the closed position (S), the valve part (86) is sealed off from the valve housing (66); and
- the valve element (78) is free from a surface extending obliquely or perpendicularly to the direction of movement (80), at least on the outer circumferential side, along its entire extension (ER) which, at least in the closed position (S), extends, in the direction of movement (80), between the sealing elements (90, 92).

2. Secondary air valve (64) according to claim 1,
**characterized in that**
the valve element (78) is cylindrical, on the outer circumferential side, along its entire extension (ER) which, at least in the closed position (S), extends, in the direction of movement (80), between the sealing elements (90, 92).

3. Secondary air valve (64) according to claim 1 or claim 2,
**characterized in that**
the sealing elements (90, 92) are separate from one another and are spaced apart from one another in the direction of movement (80).

4. Secondary air valve (64) according to any of the preceding claims,
**characterized in that**
the sealing elements (90, 92) are held on the valve housing (66) so that the valve element (78) can be moved, in the direction of movement (80), relative to the valve housing (66) and relative to the sealing elements (90, 92) between the closed position (S) and the open position (O).

5. Secondary air valve (64) according to any of the preceding claims,
**characterized in that**
the inlet opening (72) has a passage direction (74) in which the inlet opening (72) can be flowed through by the air flowing into the valve housing (66) through the inlet opening (72), the passage direction (74) extending obliquely or perpendicularly to the direction of movement (80).

6. Internal combustion engine (10) for a motor vehicle, comprising a secondary air system (52) which has at least one secondary air valve (64) according to any of the preceding claims.

7. Internal combustion engine (10) according to claim 6,
**characterized in that**
the internal combustion engine (10) has:
- the exhaust tract (22); and
- an intake tract (20) through which air can flow and by means of which the air flowing through the intake tract (20) can be introduced into at least one combustion chamber (18) of the internal combustion engine (10), the secondary air system (52) having:
∘ a secondary air line (54) which is connected or can be connected fluidically to the intake tract (20) at a connection point (V) arranged upstream of the combustion chamber (18) so that at least a portion of the air flowing through the intake tract (20) can be diverted from the intake tract (20) at the connection point (V) by means of the secondary air line (54) and introduced into the exhaust tract (22) as secondary air, bypassing the combustion chamber (18); and
∘ the secondary air valve (64) which is arranged in the secondary air line (54).

8. Internal combustion engine (10) according to claim 7,
**characterized in that**
a compressor (28) for compressing the air flowing through the intake tract (20) is arranged in the intake tract (20), the connection point (V) being arranged downstream of the compressor (28).

9. Motor vehicle comprising an internal combustion engine (10) according to any of claims 6 to 8.

## Revendications

1. Soupape d'air secondaire (64) pour un système d'air secondaire (52) d'un moteur à combustion interne (10), comportant :
- un boîtier de soupape (66) pouvant être traversé par de l'air secondaire à introduire dans un conduit d'échappement (22) du moteur à combustion interne (10), lequel boîtier présente :
∘ un espace de boîtier (68) cylindrique, qui est directement délimité par une surface d'enveloppe (70) côté circonférence interne du boîtier de soupape (66) ;
∘ une ouverture d'entrée (72), par l'intermédiaire de laquelle l'air secondaire peut être introduit dans le boîtier de soupape (66) et dans l'espace de boîtier (68) ; et
∘ présente une ouverture de sortie (76), par l'intermédiaire de laquelle l'air secondaire peut être évacué du boîtier de soupape (66) pour introduire l'air secondaire dans le conduit d'échappement (22), et
- un élément de soupape (78), qui est mobile le long d'une direction de déplacement (80) par rapport au boîtier de soupape (66) entre une position de fermeture (S) fermant l'ouverture de sortie (76) et au moins une position d'ouverture (O) libérant l'ouverture de sortie (76),
**caractérisée en ce que** :
- l'ouverture d'entrée (72) est agencée le long de la direction de déplacement (80) entre deux éléments d'étanchéité (90, 92), par le biais desquels une surface d'enveloppe (94) de l'élément de soupape (78) côté circonférence externe, tournée vers la surface d'enveloppe (70) côté circonférence interne, est rendue étanche par rapport à la surface d'enveloppe (70) du boîtier de soupape (66) côté circonférence interne ;
- l'élément de soupape (78) est conçu comme une soupape en forme d'assiette ou de disque et présente une partie de soupape (86) en forme d'assiette ou de disque et une tige de soupape (88), à laquelle la partie de soupape (86) est reliée ;
- la soupape d'air secondaire (64) présente un troisième élément d'étanchéité (96), par le biais duquel, dans la position de fermeture (S), la partie de soupape (86) est rendue étanche par rapport au boîtier de soupape (66) ; et
- l'élément de soupape (78) est exempt, au moins côté circonférence externe, le long de toute son extension (ER) s'étendant, au moins dans la position de fermeture (S), le long de la direction de déplacement (80) entre les éléments d'étanchéité (90, 92), d'une surface s'étendant obliquement ou perpendiculairement à la direction de déplacement (80).

2. Soupape d'air secondaire (64) selon la revendication 1,
**caractérisée en ce que**
l'élément de soupape (78) est conçu cylindrique côté circonférence externe le long de toute son extension (ER) s'étendant au moins dans la position de fermeture (S) le long de la direction de déplacement (80) entre les éléments d'étanchéité (90, 92).

3. Soupape d'air secondaire (64) selon la revendication 1 ou 2,
**caractérisée en ce que**
les éléments d'étanchéité (90, 92) sont conçus séparément les uns des autres et sont espacés les uns des autres le long de la direction de déplacement (80).

4. Soupape d'air secondaire (64) selon l'une des revendications précédentes,
**caractérisée en ce que**
les éléments d'étanchéité (90, 92) sont maintenus sur le boîtier de soupape (66), de sorte que l'élément de soupape (78) peut être déplacé le long de la direction de déplacement (80) par rapport au boîtier de soupape (66) et par rapport aux éléments d'étanchéité (90, 92) entre la position de fermeture (S) et la position d'ouverture (O).

5. Soupape d'air secondaire (64) selon l'une des revendications précédentes,
**caractérisée en ce que**
l'ouverture d'entrée (72) présente une direction de passage (74) le long de laquelle l'ouverture d'entrée (72) peut être traversée par l'air s'écoulant dans le boîtier de soupape (66) par l'intermédiaire de l'ouverture d'entrée (72), dans laquelle la direction de passage (74) s'étend obliquement ou perpendiculairement à la direction de déplacement (80).

6. Moteur à combustion interne (10) pour un véhicule automobile, comportant un système d'air secondaire (52) qui présente au moins une soupape d'air secondaire (64) selon l'une des revendications précédentes.

7. Moteur à combustion interne (10) selon la revendication 6,
caractérisé en ce
le moteur à combustion interne (10) présente :
- le conduit d'échappement (22) ; et
- un conduit d'admission (20) pouvant être traversé par de l'air, par le biais duquel l'air traversant le conduit d'admission (20) peut être introduit dans au moins une chambre de combustion (18) du moteur à combustion interne (10), dans lequel le système d'air secondaire (52) présente :
∘ une conduite d'air secondaire (54) qui est ou peut être reliée fluidiquement au conduit d'aspiration (20) en un point de liaison (V) agencé en amont de la chambre de combustion (18), de sorte que par le biais de la conduite d'air secondaire (54), au moins une partie de l'air traversant le conduit d'aspiration (20) peut être dérivée du conduit d'aspiration (20) au point de liaison (V) et peut être introduite dans le conduit d'échappement (22) en tant qu'air secondaire en contournant la chambre de combustion (18) ; et
∘ la soupape d'air secondaire (64), qui est agencée dans la conduite d'air secondaire (54).

8. Moteur à combustion interne (10) selon la revendication 7,
caractérisé en ce
dans le conduit d'aspiration (20) est agencé un compresseur (28) pour comprimer l'air traversant le conduit d'aspiration (20), dans lequel le point de liaison (V) est agencé en aval du compresseur (28).

9. Véhicule automobile, comportant un moteur à combustion interne (10) selon l'une des revendications 6 à 8.
